(19) Europäisches Patentamt
European Patent Office
Office européen des brevets

(11) Numéro de publication: **0 102 093**
**B1**

(12) **FASCICULE DE BREVET EUROPEEN**

(45) Date de publication du fascicule du brevet: **07.01.87**

(51) Int. Cl.$^4$: **B 27 K 3/50**, A 01 N 25/04

(21) Numéro de dépôt: **83200962.5**

(22) Date de dépôt: **29.06.83**

(54) **Compositions pesticides pour le traitement du bois.**

(30) Priorité: **13.07.82 FR 8212531**

(43) Date de publication de la demande:
**07.03.84 Bulletin 84/10**

(45) Mention de la délivrance du brevet:
**07.01.87 Bulletin 87/02**

(84) Etats contractants désignés:
**AT BE CH DE GB IT LI LU NL SE**

(56) Documents cités:
**EP-A-0 038 932**
**FR-A-2 030 451**
**FR-A-2 474 936**
**US-A-3 281 318**
**US-A-3 617 314**

(73) Titulaire: **Société Industrielle et Salines de Bayonne**
**Mouguerre Quartier du Port**
**F-64105 Bayonne (FR)**

(72) Inventeur: **Parisse, Christian**
**Clos Saint-Jean Résidence Ispéguy**
**F-64600 Anglet (FR)**
Inventeur: **de Reure, François**
**Basa Oihana**
**F-64480 Ustaritz (FR)**

(74) Mandataire: **Anthoine, Paul et al**
**SOLVAY & Cie Département de la Propriété Industrielle 310, rue de Ransbeek**
**B-1120 Bruxelles (BE)**

**EP 0 102 093 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne des composition pesticides pour la traitement du bois, par exemple des bois de charpente ou de menuiserie, comprenant un agent pesticide insoluble dans l'eau, une résine synthétique diluable à l'eau, un émulsionnant hydrosoluble et un composé aminé. Elle concerne plus particulièrement de telles compositions qui se présentent sous forme concentrée et sont diluables par de l'eau avant d'être mises en oeuvre, ainsi que de telles compositions diluées par de l'eau et prêtes à l'emploi.

On connaît, par le brevet US—A—3 281 318 (CHAPMAN CHEMICAL COMPANY), des compositions pesticides de ce genre qui consistent en des émulsions aqueuses d'un mélange d'un polychlorophénol, d'une cire, d'un acide gras, d'un émulsionnant non ionique et d'une alkanolamine. Dans ces compositions pesticides connues, l'émulsionnant non ionique a pour fonction de renforcer l'homogénéité de l'émulsion et l'alkanolamine, qui est de préférence l'éthanolamine, a pour fonction de faciliter la dispersion de l'acide gras et du polychlorophénol. Du fait de la présence d'une cire exerçant la fonction d'agent de fixation du polychlorophénol, ces compositions pesticides connues présentent l'inconvénient de se prêter difficilement à une imprégnation en profondeur suffisante des éléments en bois traités, et la protection qu'elles assurent est de courte durée. La stabilité de ces compositions pesticides est par ailleurs précaire.

Pour remédier à ces désavantages, on a proposé, dans la demande de brevet DE—A—3 004 319 (Desowag Bayer Holzschutz GmbH) des compositions pesticides en émulsion aqueuse, dans lesquelles on met en oeuvre, pour assurer la fixation des agents actifs dans le bois, une résine synthétique diluable à l'eau conjointement avec une amine, l'émulsionnant étant également non ionique.

Dans le document EP—A—92457, en décrit des compositions pesticides pour le traitement du bois, comprenant des agents pesticides insolubles dans l'eau, une résine synthétique diluable à l'eau, une alkanolamine et un émulsionnant anionique sélectionné parmi les sels d'acides carboxyliques.

Dans le document EP—A—38932, on décrit des compositions pesticides aqueuses pour le traitement du bois, comprenant des agents pesticides insolubles dans l'eau, des résines alkydes diluables à l'eau et des tensioactifs non ioniques.

La présente invention vise à procurer des compositions pesticides qui, après dilution par de l'eau, présentent l'aspect d'une véritable solution et en possèdent notamment la transparence, qui sont dotées d'une excellent stabilité et qui possèdent un pouvoir de pénétration dans le bois élevé.

L'invention concerne à cet effet des comnpositions pesticides pour le traitement du bois, comprenant un agent pesticide insoluble dans l'eau, une résione synthétique diluable à l'eau, un émulsionnant hydrosoluble anionique et au moins une alkanolamine; selon l'invention, l'émulsionnant hydrosoluble anionique est sélectionné parmi les alkylbenzènesulfonates d'ammonium et des métaux alcalins.

Dans les compositions selon l'invention, l'agent pesticide peut étre tout agent pesticide insoluble dans l'eau, qui est communément utilisé dans les compositions pesticides pour le traitement du bois. Il peut être un fongicide insoluble dans l'eau ou un insecticide insoluble dans l'eau, Au besoin, les compositions pesticides selon l'invention peuvent contenir plusieurs fongicides insolubles dans l'eau ou plusieurs insecticides insolubles dans l'eau ou un mélange d'un ou de plusieurs fongicides insolubles dans l'eau avec un ou plusieurs insecticides insolubles dans l'eau.

Des exemples d'insecticides insolubles dans l'eau, utilisables dans les compositions pesticides selon l'invention sont le pyrèthre, les pyréthroïdes (tels que la pyréthrine, l'allétrine, la cycléthrine, la furéthrine, la tétraméthrine, la décaméthrine et la bioresméthrine), les carbamat es insecticides (tels que le propoxur), les esters d'acides phosphonique, phosphorique, thiophosphorique, dithiophosphorique ou thionophosphorique, les hydrocarbures chlorés (tels que le méthoxychlore, le lindane, le chlordane, l'heptachlore, l'aldrine et la dieldrine).

Des exemples de fongicides insolubles dans l'eau, utilisables dans les compositions pesticides selon l'invention sont les composés organiques de l'étain tétravalent (tels que le benzoate de tributylétain, le phosphate de tris)tributylétain) et l'oxyde de bis(tributylétain)), les 1-trityl-1,2,4-triazoles de formule générale dans laquelle R désigne un atome de fluor, de chlore ou de brome, un groupe trifluorométhyle, nitro ou cyano ou un groupe alkyle ayant jusqu'à 4 atomes de carbone et n les nombres 1 ou 2, ainsi que leurs sels d'acides organiques ou inorganiques (par exemple le trifluorométhyl-triphénylméthyltriazole), l'hexachlorobenzène, le pentachlorobenzène, les chélates fongicides de tris —(N-cyclohexyldiazénium-dioxyde)-métal, spécialement celui de l'aluminium que l'on retrouve dans le produit connu sous la dénomination Xyligen Al (BASF), le N,N-diméthyl-N'-phényl-N'-(fluorodichlorométhylthio)sulfamide, le N,N-diméthyl-N'-p-tolyl-N'-(dichlorofluorométhylthio)-sulfamide, les naphtalènes chlorés, les naphténates de cuivre et de zinc, le mercaptobenzothiazole et ses sels, l'hydroxy 8-quinoléine et ses sels, les esters organo-boriques, les ammonium quaternaires et leurs dérivés, les dérivés de condensation de diphénylamines/acétone, le N-cyclohexyl,N-méthoxy, 2,5-diméthyl-furane-3-carboxamide que l'on retrouve dans le produit connu sous la dénomination Xyligen B (BASF), le N-(trichlorométhylthio)-phthalimide, le 5-éthoxy-3-trichlorométhyl-1,2,4-thiadiazol, le 2-(4-thiazolyl)benzimidazol, le 5-n-butyl-2-diméthylamino-4-hydroxy-6-méthyl-pyrimidine, l'orthophénylphénol, le paraphénylphénol.

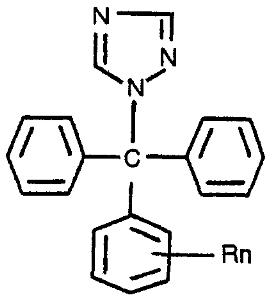

Dans une forme de réalisation spécialement avantageuse de l'invention, l'agent pesticide des compositions est sélectionné parmi les phénols chlorés. Des phénols chlorés préférés sont les polychlorophénols, le tétrachlorophénol et le pentachlorophénol s'avérant spécialement avantageux.

La résine synthétique diluable à l'eau présente dans les compositions selon l'invention est de préférence une résine alkyde qui est soluble dans l'eau grâce à la formation d'un sel avec le composé aminé, ou une résine alkyde modifiée acrylique, telle que celle connue sous la marque Hydrorob (Robbe).

L'émulsionnant des compositions pesticides selon l'invention est un émulsionnant hydrosoluble anionique sélectionné parmi les alkylbenzènesulfonates d'ammonium et des métaux alcalins. Ceux-ci peuvent être des alkylbenzènesulfonates linéaires ou des alkylbenzènesulfonates branchés; les alkylbenzènesulfonates linéaires, généralement désigenés "LAS" ont la préférence. Des alkylbenzènesulfonates linéaires particuliérement avantageux sont ceux dont la chaine alkyle comprend de 8 à 18 atomes de carbone et plus spécialement de 10 à 14 atomes de carbone; les dodécyclbenzène-sulfonates, notamment le dodécylbenzènesulfonate de sodium, conviennent particulièrement bien.

Dans les compositions selon l'invention, l'émulsionnant anionique peut être utilisé tel quel ou à l'état d'une dispersion ou d'une solution dans un solvant organique ou de l'eau, si on souhaite en diminuer la viscosité. On obtient généralement de très bons résultats en utilisant, conformément à l'invention, des produits émulsionnants qui contiennent de 30 à 80 parties en poids d'alkylbenzènesulfonates d'ammonium ou de métal alcalin comprenant de 10 à 14 atomes de carbone dans la chaîne alkyle, et de 20 à 70 parties en poids d'un ou plusieurs solvants organiques et/ou d'eau; les meilleurs résultats sont habituellement obtenus avec de tels produits émulsionnants qui contiennent de 40 à 60 parties en poids d'alkylbenzènesulfonate(s) et de 30 à 50 parties en poids de solvant(s) organique(s) et/ou d'eau.

Les alkanolamines des compositions pesticides selon l'invention peuvent être les produits conventionnels dont le radical alkanol comprend de 2 à 4 atomes de carbone et qui sont obtenus en faisant réagir de l'ammoniac avec un oxyde d'éthylène, de propylène, ou de butène tels que la monoéthanolamine, la diéthanolamine, la triéthanolamine, la monoisopropanolamine, la diisopropanolamine, la triisopropanolamine, mono-sec-butanolamine, la di-sec-butanolamine et tri-sec-butanolamine. On donne toutefois la préférence aux alkanolamines dont le radical alkanol comprend de 2 à 4 atomes de carbone et qui sont substituées par au moins un radical alkyle ou phényle comprenant de préférence de 1 à 8 atomes de carbone et plus particulièrement aux alkanolamines substituées par deux radicaux alkyles comprenant de préférence de 1 à 4 atomes de carbone. Des exemples de pareilles alkanolamines sont, d'une part, la méthyléthanolamine, la butyléthanolamine, la phényléthyléthanolamine, la méthyldiéthanolamine, l'éthyldiéthanolamine et la phényldiéthanolamine, et, d'autre part, la diméthyléthanolamine, la diéthyléthanolamine, la diisopropyléthanolamine, la dibutyléthanolamine et la diméthylisopropanolamine. Les meilleurs résultats ont été obtenus avec les alkanolamines dont le point de congélation est inférieur à −25°C et, de préférence, inférieur à −50°C et, plus particuliérement, avec la diéthyléthanolamine.

La quantité relative d'alkanolamine qu'il convient de mettre en oeuvre peut être facilement déterminée expérimentalement et dépend de divers facteurs, parmi lesquels figurent notamment la nature de l'alkanolamine ainsi que la nature et la quantité relative de chaque constituant de la composition et la concentration souhaitée pour l'émulsion aqueuse à produire. En régle générale, il s'est avéré souhaitable de régler la teneur pondérale de l'alkanolamine de manière que le rapport entre le poids de l'alkanolamine et le poids de l'agent pesticide soit compris entre 0,1 et 2, de préférence entre 0,25 et 1,25, les résultats les plus avantageux étant obtenus avec des rapports pondéraux compris entre 0,5 et 1.

Toutes autres choses étant égales, la sélection de l'alkanolamine parmi celles à température de congélation inférieure à −25°C assure l'obtention d'émulsions aqueuses de très grande stabilité, capables de supporter des variations importantes de température, notamment des alternances de périodes de gel et de périodes de dégel, sans que leur stabilité, leur limpidité et leur pouvoir de pénétration dans le bois en soient affectés.

Pour réduire le coût des compositions conformes à cette forme de réalisation préférée de l'invention, sans nuire aux propriétés des émulsions aqueuses obtenues, on peut, en variante, substituer une partie de l'alkanolamine à basse température de congélation, par une quantité équivalente d'alkanolamine à température de congélation plus élevée. Dans cette variante de l'invention, les quantités relatives d'alkanolamines à basse et haute températures de congélation à mettre en oeuvre dépdendent des écarts de températures auxquels on prévoit que les émulsions aqueuses seront soumises, la part relative de l'alkanolamine à basse température de congélation étant d'autant plus grande que ces écarts de

températures sont grands et que les températures de stockage, de manutention ou d'utilisation risquent de descendre bas. En pratique, il est souhaitable d'utiliser au moins 10% en poids et de préférence au moins 20% en poids, d'alkanolamine à température de congélation inférieure à −25°C, et de préfé rence à −50°C. En pratique, il n'est pas nécessaire de dépasser 75% en poids, et le plus souvent 50% en poids, de pareille alkanolamine.

La quantité optimum d'émulsionnant anionique à mettre en oeuvre dans les compositions pesticides selon l'invention peut ê également déterminée expérimentalement et dépend aussi de divers facteurs, et notamment de l'émulsionnant sélectionné, ainsi que de la nature et des concentrations des autres constituants. D'une manière générale, il s'est avéré souhaitable de régler la teneur en émulsionnant anionique, de manière que le rapport entre la somme des poids de l'émulsionnant et de l'alkanolamine et la somme des poids des autres constituants des compositions, autres que l'eau, normalement insolubles dans l'eau, soit compris entre 1 et 2, de préférence entre 1,25 et 1,50.

En plus du pesticide insoluble dans l'eau, de la résine synthétique diluable à l'eau, de l'émulsionnant anionique et de l'alkanolamine, les compositions pesticides selon l'invention peuvent contenir d'autres constituants et notamment un plastifiant en un cosolvant.

Comme plastifiant, tous les plastifiants liquides ou pâteux à la température ambiante conviennent. A titre d'exemples de pareils plastifiants, on peut citer les phosphates et les esters d'acides gras tels que le phosphate de tributyle, le stéarate de butyle l'oléate de butyle, le sébaçate de dibutyle et le phtalate de dioctyle. De préférence, ces plastifiants sont des esters dérivés d'acides dicarboxyliques comprenant de 4 à 10 atomes de carbone tels que les acides maléique, adipique et phtalique et d'alcools comprenant de 2 à 8 atomes de carbone. Les meilleurs résultats ont été obtenus avec les phtalates d'alcools comprenant de 3 à 6 atomes de carbone et plus particulièrement avec le phtalate de dibutyle.

Comme cosolvant, tous les cosolvants habituellement associés aux résines alkydes hydrosolubles conviennent et notamment les alcools et, de préférence, les glycols et les éthers glycoliques comprenant de 2 à 8 atomes de carbone. Les meilleurs résultats ont été obtenus avec les glycols comprenant de 2 à 4 atomes de carbone et plus particulièrement avec l'éthylèneglycol. Les compositions contenant un cosolvant conviennent particulièrement bien pour être exploitées à des températures hivernales. Il est souhaitable que le poids de cosolvant mis en oeuvre n'excède pas 20% et, de préférence, 10% du poids de la résine synthétique diluable à l'eau.

Les compositions selon l'invention peuvent éventuellement contenir une cire, mais il est alors souhaitable que la cire soit en quantité pondérale n'excédant pas 0,5 % du poids de la composition; il est préférable, en général, que les compositions selon l'invention soient exemptes de cire.

Les compositions pesticides selon l'invention se trouvant sous forme concentrée peuvent éventuellement contenir un peu d'eau de dilution, destinée à leur conférer une fluidité suffisante pour permettre leur transvasement dans des récipients de stockage et leur manutention au moment de la préparation des compositions pesticides diluées à l'eau prêtes à l'emploi. En principe, la quantité d'eau de dilution n'est pas critique et elle peut être déterminée aisément, dans chaque cas particulier, en fonction des constituants du concentré et de la fluidité recherchée. En pratique, on obtient généralement de bons résultats avec des concentrés contenant une quantité d'eau allant jusqu'à 50% du poids global du concentré, des valuers supérieures à 10% et généralement comprises entre 25 et 40% étant préférées.

Des compositions pesticides selon l'invention, qui se sont révélées spécialement adaptées à l'obtention d'émulsions aqueuses pesticides diluées prêtes à l'emploi, de très grande stabilité, de très grande finesse et de grande limpidité, sont ceux consistant en:

— 5 à 20 parties en poids de phénol chloré.
— jusqu'à 4 parties en poids d'un hydrocarbure chloré insecticide,
— 5 à 20 parties en poids de résine alkyde soluble dans l'eau,
— 5 à 20 parties en poids de plastifiant,
— 5 à 20 parties en poids d'alkanolamine
— 5 à 20 parties en poids d'alkylbenzènesulfonate linéaire de sodium dont la chaîne alkyle contient de 10 à 14 atomes de carbone,
— 5 à 20 parties en poids de cosolvant, et
— jusqu'à 50 parties en poids d'eau,

le solde éventuel consistant en substances communément présentes dans les compositions pesticides pour le traitement du bois. Ces agents peuvent être, par exemple, des agents anti-UV, des siccatifs ou des pigments.

Les compositions pesticides diluées à l'eau selon l'invention, prêtes à l'emploi, présentent un taux de dilution que l'on choisit dans chaque cas particulier et qui dépend de divers facteurs, notamment de la nature et des concentrations respectives de leurs constituants. En règle générale, des taux de dilution qui conviennent sont ceux correspondant à une partie en poids de constituants autres que l'eau pour deux à six parties en poids d'eau dans la composition.

Pour fabriquer les compositions pesticides selon l'invention, il suffit en général de mélanger leurs constituants. En pratique, il convient d'exécuter le mélange à des températures et des pressions pour lesquelles on ne risque pas un figeage du mélange de constituants ou une vaporisation de l'un ou plusieurs de ces constituants. On peut par exemple réaliser le mélange à une température comprise entre 15 et 75°C

et une pression comprise entre 0,535 et 1,135 bar, les températures préférées étant situées entre 30 et 55°C et les pressions préférées, entre 0,865 et 1,055 bar.

Les compositions pesticides selon l'invention se sont révélées être des émulsions aqueuses extrêment fines, présentant l'aspect de solutions transparentes et homogènes. Elles présentent une grande stabilité dans le temps et une grande résistance aux variations de température et aux sollicitations mécaniques telles que des chocs, des chutes ou des centrifugations, sans que leur stabilité en soit affectée.

Des exemples de concentrés conformes à l'invention sont décrits ci-après.

Exemple 1

On a mélangé intimement, à la température d'environ 40°C, du pentachlorophénol, de l'aldrine, du phtalate de diisobutyle, de l'éthylèneglycol et le produit connu sous le nom "Uradil 30100" (Scado N.V.), qui est une résine alkyde.

Au mélange résultant, on a ajouté successivement un mélange de diéthyléthanolamine et de monoéthanolamine, puis en produit émulsionnant contennant environ une partie en poids d'eau, une partie en poids d'isobutanol et 2 parties en poids d'un mélange d'alkylbenzène sulfonates sodiques à chaîne alkyle linéaire de formule générale:

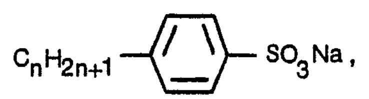

dans laquelle: $10 \leq n \leq 14$.

Après allongement à l'eau pour lui conférer une fluidité suffisante permettant son transvasement dans des récipients de stockage, le concentré présentait la composition pondérale suivante:

| CONSTITUANTS | % EN POIDS |
|---|---|
| Pentachlorophénol | 14 |
| Aldrine | 2 |
| Résine Uradil 30.100 | 13 |
| Phtalate de diisobutyle | 13 |
| Ethylèneglycol | 1 |
| Diéthyléthanolamine | 4 |
| Monoéthanolamine | 10 |
| Produit émulsionnant | 10 |
| Eau | 33 |

Ce concentré a été dispersé de l'eau, à raison d'une partie en poids de concentré et de quatre parties en poids d'eau, de manière à obtenir une composition pesticide diluée prête à l'emploi pour le traitement de pièces en bois, notamment des matériaux de construction tels que des bois de charpente. Ces compositions se sont révélées être des émulsions aqueuses extrêment fines, dont les globules présentaient un diamètre moyen inférieur à 0,05 micromètre suivant la définition de la norme AFNOR T73-409. Elles présentaient de ce fait l'aspect de solution aqueuses transparentes. Soumises à un essai de centrifugation correspondant à une accélération centrifuge dew 98.100 m/sec$^2$, pendant une heure, elles n'ont pas subi d'altération.

Exemple 2

On a mélangé intimement, à la température d'environ 40°C, de la décaméthrine, le fongicide connu sous la dénomination "Xyligen B" (BASF) qui est constitué principalement de N-cyclohexyl, N-méthoxy, 2,5-diméthyl-furane-3-carboxamide, et le produit connu sous la dénomination "Hydrorob 2428" (Robbe) qui est une résine alkyde modifiée acrylique. Au mélange résultant, on a d'abord ajouté un mélange de diéthanolamine et de monoéthanolamine, puis le produit émulsionnant utilisé dans l'exemple 1.

Après allongement à l'eau, le concentré présentait la composition pondérale suivante:

| CONSTITUANTS | % EN POIDS |
|---|---|
| Décaméthrine | 0,2 |
| Fongicide "Xyligen B" | 6,0 |
| Résine "Hydrorob 2428" | 12,0 |
| Diéthanolamine | 1,0 |
| Monoéthanolamine | 1,0 |
| Produit émulsionnant | 10,0 |
| Eau | 69,8 |

Le concentré a été dispersé dans de l'eau, à raison d'une partie en poids de concentré et de quatre parties en poids d'eau, de manière à obtenir une composition pesticide diluée, prête à l'emploi pour le traitement de piéces en bois, notamment des matériaux de construction tels que des bois de charpente. Ces compositions se sont également révélées être des émulsions aqueuses extrêment fines, dont les globules présentaient un diamètre moyen inférieur à 0,05 micrométre suivant la définition de la norme AFNOR T73—409. De ce fait, elles présentaient aussi l'aspect de solutions aqueuses transparentes. Soumises à un essai de centrifugation correspondant à une accélération centrifuge de 98.100 $m/xec^2$, pendant une heure, elles n'ont pas subi d'altération.

Exemple 3 (de référence)

A titre comparatif, soumises au même essai de centrifugation, des compositions pesticides en émulsion aqueuse du type de celles décrites dans le brevet US—A—3 281 318 précité se sont séparées en deux phases superposées après quinze minutes de centrifugation.

**Revendications**

1. Compositions pesticides pour le traitement du bois, comprenant un agent pesticide insoluble dans l'eau, une résine synthétique diluable à l'eau, un émulsionnant hydrosoluble anionique et au moins une alkanolamine, caractérisées en ce que l'émulsionnant hydrosoluble anionique est sélectionné parmi les alkylbenzènesulfonates d'ammonium et des métaux alcalins.

2. Compositions selon la revendication 1, caractérisées en ce que l'alkanolamine est une alkanolamine présentant une température de congélation inférieure à −50°C.

3. Compositions selon la revendication 1 ou 2, caractérisées en ce que l'alkanolamine est une alkanolamine dont le radical alkanol comprend de 2 à 4 atomes de carbone et qui est substituée par deux radicaux alkyles comprenant de 1 à 4 atomes de carbone.

4. Compositions selon la revendication 3, caractérisées en ce que l'alkanolamine est de la diéthyléthanolamine.

5. Compositions selon l'une quelconque des revendications 1 à 4, caractérisées en ce que le rapport entre le poids de l'alkanolamine et le poids de l'agent pesticide est compris entre 0,5 et 1.

6. Compositions selon l'une quelconque des revendications 2 à 5, caractérisées en ce qu'elles comprennent un mélange d'une alkanolamine à température de congélation inférieure à −50°C et d'une alkanolamine à température de congélation supérieure à +10°C.

7. Compositions selon la revendication 6, caractérisées en ce que le mélange conntient de 20 à 50% en poids d'alkanolamine à température de congélation inférieure à −50°C.

8. Compositions selon la revendication 7, caractérisées en ce que l'émulsionnant anionique est sélectionné parmi les alkylbenzènesulfonates linéaires des métaux alcalins, comprenant de 10 à 14 atomes de carbone dans la chaîne alkyle.

9. Compositions selon l'une quelconque des revendications 1 à 8, caractérisées en ce que le pesticide insoluble dans l'eau est sélectionné parmi les phénols chlorés.

10. Compositions selon l'une quelconque des revendications 1 à 9, caractérisées en ce qu'elles contiennent en outre un plastifiant qui est un phtalate d'un alcool comprenant de 3 à 6 atomes de carbone et un cosolvant qui est un glycol ou un éther glycolique comprenant de 2 à 8 atomes de carbone.

11. Compositions selon la revendication 10, caractérisées en ce que le rapport entre la somme des poids de l'émulsionnant, du cosolvant et de l'alkanolamine et la somme des poids des autres constituants, non hydrosolubles, est compris entre 1,25 et 1,50.

12. Compositions selon la revendication 10 ou 11, caractérisées en ce qu'elles consistent en:
— 5 à 20 parties en poids de phénol chloré,
— jusqu'à 4 parties en poids d'un hydrocarbure chloré insecticide,
— 5 à 20 parties en poids de résine alkyde soluble dans l'eau,
— 5 à 20 parties en poids de plastifiant,
— 5 à 20 parties en poids d'alkylbenzènesulfonate linéaire de sodium, dont la chaîne alkyle contient de 10 à 14 atomes de carbone,
— 5 à 20 parties en poids d'alkanolamine,
— 5 à 20 parties en poids de cosolvant, et
— jusqu'à 50 parties en poids d'eau,
le solde éventuel consistant en des substances communément présentes dans les compositions pesticides pour le traitement du bois.

**Patentansprüche**

1. Pestizide Zusammensetzungen für die Holzbehandlung enthaltend ein in Wasser unlösliches Pestizid, ein mit Wasser verdünnbares synthetisches Harz, einen in Wasser löslichen anionischen Emulgator und mindestens ein Alkanolamin dadurch gekennzeichnet, daß der wasserlösliche anionische Emulgator ausgewählt ist unter den Alkylbenzolsulfonaten des Ammoniums und der Alkalimetalle.

2. Zusammensetzungen gemäß Anspruch 1, dadurch gekennzeichnet, daß das Alkanolamin ein Alkanolamin ist, welches einen Stockpunkt unterhalb von −50°C besitzt.

3. Zusammensetzungen gemäß Anspruch 1 oder 2, dadurch gekennzeichnet, daß das Alkanolamin ein Alkanolamin ist, dessen Alkanolrest 2 bis 4 Kohlenstoffatome enthält und welches durch 2 Alkylreste mit 1 bis 4 Kohlenstoffatomen substituiert ist.

4. Zusammensetzungen gemäß Anspruch 3, dadurch gekennzeichnet, daß das Alkanolamin Daïthylethanolamin ist.

5. Zusammensetzungen gemäß einem der Ansprüche 1 bis 4, dadurch gekennzeichnet, daß das Gewichtsverhältnis zwischen dem Alkanolamin und dem Pestizid zwischen 0,5 und 1 liegt.

6. Zusammensetzungen gemäß einem der Ansprüche 2 bis 5, dadurch gekennzeichnet, daß sie eine Mischung eines Alkanolamins mit einem Stockpunkt unterhalb von −50°C und eines Alkanolamins mit einem Stockpunkt oberhalb von +10°C enthalten.

7. Zusammensetzungen gemäß Anspruch 6, dadurch gekennzeichnet, daß die Mischung 20 bis 50 Gew.-% des Alkanolamins mit dem Stockpunkt unterhalb von °50°C enthalten.

8. Zusammensetzungen gemäß Anspruch 7, dadurch gekennzeichnet, daß der anionischen Emulgator ausgewählt ist unter den linearen Alkylbenzolsulfonaten von Alkalimetallen enthalten 10 bis 14 Kohlenstoffatome in der Alkylkette.

9. Zusammensetzung gemäß einem der Ansprüche 1 bis 8, dadurch gekennzeichnet, daß das wasserunlösliche Pestizid ausgewählt ist unter den chlorierten Phenolen.

10. Zusammensetzungen gemäß einem der Ansprüche 1 bis 9, dadurch gekennzeichnet, daß sie außerdem einen Weichmacher enthalten, der ein Phthalat eines Alkohols mit 3 bis 6 Kohlenstoffatomen ist und ein Co-Lösungsmittel, welches ein Glykol oder ein Glykolether mit 2 bis 8 Kohlenstoffatomen ist.

11. Zusammensetzungen gemäß Anspruch 10, dadurch gekennzeichnet, daß das Verhältnis zwischen der Summe der Gewichte des Emulgators, des Co-Lösungsmittels und des Alkanolamins und der Summe der Gewichte der anderen, nicht wasserlölichen Bestandteile zwischen 1,25 und 1,50 liegt.

12. Zusammensetzungen gemäß Anspruch 10 oder 11, dadurch gekennzeichnet, daß sie bestehen aus:
5—20 Gewichtsteilen Chloriertem Phenol,
bis zu 4 Gewichtsteilen eines Chlorkohlenwasserstoff-Insektizids,
5—20 Gewichtsteilen eines wasserlöslichen Alkydharzes,
5—20 Gewichtsteilen eines Weichmachers,
5—20 Gewichtsteilen eines linearen Natriumalkylbenzolsulfonats, dessen Alkylkette 10 bis 14 Kohlenstoffatome enthält,
5—20 Gewichtsteilen eines Alkanolamins,
5—20 Gewichtsteilen eines Co-Lösungsmittels und
bis zu 50 Gewichtsteilen Wasser,
wobei der gegebenenfalls verbleibende Rest aus Substanzen besteht die überlicherweise in pestiziden Zusammensetzungen für die Holzbehandlung anwesend sind.

**Claims**

1. Pesticidal compositions for treating wood, comprising a pesticidal agent which is insoluble in water, a synthetic resin which can be diluted with water, an anionic water-soluble emulsifying agent and at least one alkanolamine, characterized in that the anionic water-soluble emulsifying agent is selected from ammonium and alkali metal alkylbenzenesulphonates.

2. Compositions according to Claim 1, characterized in that the alkanolamine is an alkanolamine having a freezing point below −50°C.

3. Compositions according to Claim 1 or 2, characterized in that the alkanolamine is an alkanolamine in which the alkanol radical comprises from 2 to 4 carbon atoms and which is substituted with two alkyl radicals comprising from 1 to 4 carbon atoms.

4. Compositions according to Claim 3, characterized in that the alkanolamine is diethylethanolamine.

5. Compositions according to any one of Claims 1 to 4, characterized in that the ratio of the weight of the alkanolamine to the weight of the pesticidal agent is between 0.5 and 1.

6. Compositions according to any one of Claims 2 to 5, characterized in that they comprise a mixture of an alkanolamine having a freezing point below −50°C and an alkanolamine having a freezing point above +10°C.

7. Compositions according to Claim 6, characterized in that the mixture contains from 20 to 50% by weight of alkanolamine having a freezing point below −50°C.

8. Compositions according to Claim 7, characterized in that the anionic emulsifying agent is selected from alkali metal linear alkylbenzenesulphonates comprising from 10 to 14 carbon atoms in the alkyl chain.

9. Compositions according to any one of Claims 1 to 8, characterized in that the pesticide which is insoluble in water is selected from chlorinated phenols.

10. Compositions according to any one of Claims 1 to 9, characterized in that they contain, in addition, a plasticizer which is a phthalate of an alcohol comprising from 3 to 6 carbon atoms, and a co-solvent which is a glycol or a glycol ether comprising from 2 to 8 carbon atoms.

11. Compositions according to Claim 10, characterized in that the ratio of the sum of the weights of the emulsifying agent, the co-solvent and the alkanolamine to the sum of the weights of the other constituents, which are not water-soluble, is between 1.25 and 1.50.

12. Compositions according to Claim 10 or 11, characterized in that they consist of:
5 to 20 parts by weight of chlorinated phenol,
up to 4 parts by weight of an insecticidal chlorinated hydrocarbon,
5 to 20 parts by weight of water-soluble alkyd resin,
5 to 20 parts by weight of plasticizer,
5 to 20 parts by weight of sodium linear alkylbenzenesulphonate in which the alkyl chain contains from 10 to 14 carbon atoms,
5 to 20 parts by weight of alkanolamine,
5 to 20 parts by weight of co-solvent, and
up to 50 parts by weight of water,
any remainder consisting of substances commonly present in pesticidal compositions for treating wood.